# EUROPÄISCHE PATENTANMELDUNG

(11) **EP 4 553 343 A1**
(43) Veröffentlichungstag der Anmeldung: **14.05.2025**
(21) Anmeldenummer: 24211998.0
(22) Anmeldetag: 11.11.2024
(51) Int. Cl.: F16H 25/20, B23Q 5/40, H02K 7/06, H02K 7/10, F16H 57/04, G05B 19/00, G05B 19/19

(54) **LINEAR-ANTRIEBSEINHEIT MIT GEWINDESPINDEL-MUTTER-TRIEB**

(30) Priorität: 13.11.2023 DE 102023004598
(71) Anmelder: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(57) **Zusammenfassung**

Die Erfindung betrifft eine Linear-Antriebseinheit mit einer Führungsgehäusegruppe und mit einer an dieser linear verfahrbar gelagerten Schlittengruppe, wobei in einem Führungsgehäuse der Führungsgehäusegruppe zumindest ein elektrischer Antriebsmotor mit einem Stator und einem Rotor und ein mittels des Antriebsmotors getriebener, die Schlittengruppe antreibender Gewindespindel-Mutter-Trieb angeordnet sind. Der Gewindespindel-Mutter-Trieb weist eine mit der Schlittengruppe verbundene Gewindespindel und eine mit dem Rotor verbundene Spindelmutter auf. Die Gewindespindel durchdringt den Antriebsmotor.

Mit der vorliegenden Erfindung wird eine kompakte Linear-Antriebseinheit entwickelt.

## Beschreibung

Die Erfindung betrifft eine Linear-Antriebseinheit mit einer Führungsgehäusegruppe und mit einer an dieser linear verfahrbar gelagerten Schlittengruppe, wobei in einem Führungsgehäuse der Führungsgehäusegruppe zumindest ein elektrischer Antriebsmotor mit einem Stator und einem Rotor und ein mittels des Antriebsmotors getriebener, die Schlittengruppe antreibender Gewindespindel-Mutter-Trieb angeordnet sind.

Aus der DE 10 2014 017 542 A1 ist eine Linear-Antriebseinheit bekannt, deren Motorwelle mit der Gewindespindel mittels einer Kupplung verbunden ist.

Der vorliegenden Erfindung liegt die Problemstellung zugrunde, eine kompakte Linear-Antriebseinheit zu entwickeln.

Diese Problemstellung wird mit den Merkmalen des Hauptanspruches gelöst. Dazu weist der Gewindespindel-Mutter-Trieb eine mit der Schlittengruppe verbundene Gewindespindel und eine mit dem Rotor verbundene Spindelmutter auf. Die Gewindespindel durchdringt den Antriebsmotor.

Die Linear-Antriebseinheit hat eine mit dem Rotor des Antriebsmotors verbundene, im Führungsgehäuse drehbar gelagerte Spindelmutter. Die Spindelmutter kämmt mit einer Gewindespindel, die drehfest mit der Schlittengruppe verbunden ist. Die Gewindespindel durchdringt den Antriebsmotor, wodurch die Baulänge des Antriebsmotors als Hublänge genutzt werden kann. Damit ist trotz großem Hubs der Linear-Antriebseinheit ein platzsparender Aufbau möglich.

Weitere Einzelheiten der Erfindung ergeben sich aus den Unteransprüchen und der nachfolgenden Beschreibung schematisch dargestellter Ausführungsformen.
- Figur 1:: Linear-Antriebseinheit;
- Figur 2:: Rückansicht der Linear-Antriebseinheit;
- Figur 3:: Längsschnitt der Figur 1;
- Figur 4:: Führungsgehäusekörper mit Anbauten;
- Figur 5:: Längsschnitt der Figur 4;
- Figur 6:: Schlittengruppe bei abgenommener Führungsschiene;

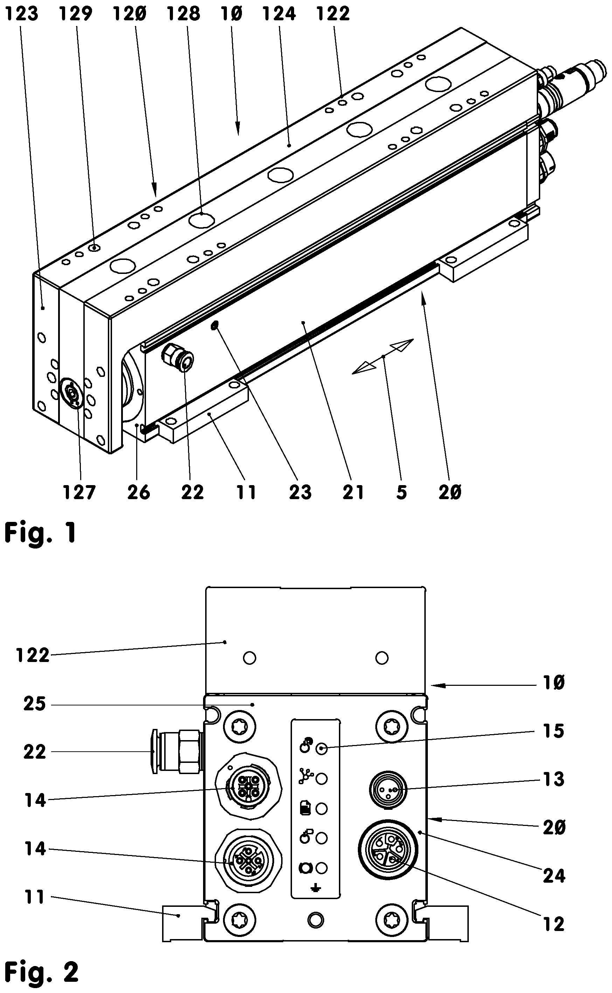

Die Figur 1 zeigt eine Linear-Antriebseinheit (10). Diese weist eine z.B. ortsfest an einer Maschine angeordnetes Führungsgehäusegruppe (20) und eine relativ hierzu verfahrbare Schlittengruppe (120) auf. Die Schlittengruppe (120) ist an der Führungsgehäusegruppe (20) in der Längsrichtung (5) der Linear-Antriebseinheit (10) verschiebbar gelagert.

Die Längsrichtung (5) der Linear-Antriebseinheit (10) kann im Raum in einem beliebigen Winkel von Null Grad bis neunzig Grad einschließlich relativ zu einer horizontalen Ebene orientiert sein. Im Folgenden ist eine Linear-Antriebseinheit (10) beschrieben, deren Längsrichtung (5) in einer horizontalen Ebene liegt und deren Schlittengruppe (120) oberhalb der Führungsgehäusegruppe (20) angeordnet ist.

Zur Befestigung der Linear-Antriebseinheit (10) z.B. an einem Maschinentisch dienen z.B. vier Befestigungspratzen (11), die beidseitig an der Führungsgehäusegruppe (20) angeordnet sind. Die elektrische Stromversorgung erfolgt beispielsweise mittels eines Versorgungsanschlusses (12), der an der rückseitigen Stirnseite der Linear-Antriebseinheit (10) angeschlossen ist. vgl. Figur 2. Beispielsweise liegt an diesem Anschluss eine Spannung von 24 Volt oder 48 Volt an. Es ist auch denkbar, eine Stromquelle in der Linear-Antriebseinheit (10) anzuordnen. Die Linear-Antriebseinheit (10) kann dann elektrisch autark betrieben werden. In den Darstellungen der Figur 2 sind außerdem ein Logikanschluss (13) und zwei Kommunikationsanschluss (14) vorgesehen. Mittels dieser Anschlüsse (13, 14) werden beispielsweise Daten und/oder Signale mit einer übergeordneten Steuerung ausgetauscht. Es ist auch denkbar, den Logikanschluss (13) und den Kommunikationsanschluss (14) oder die Kommunikationsanschlüsse (14) in einen Anschluss zusammenzufassen. Gegebenenfalls ist auch ein Zusammenschluss eines oder beider letztgenannten Anschlüsse (13, 14) mit dem Versorgungsanschluss (12) denkbar. Die Daten und/oder Signale können auch drahtlos mit der übergeordneten Steuerung ausgetauscht werden. Im Ausführungsbeispiel werden die Logikanschlüsse (13) und die Kommunikationsanschlüsse (14) mit einer Spannung von 24 Volt betrieben.

Für den Kommunikationsanschuss (14) werden beispielsweise Protokolle nach IEC 61800-7, IEC 61131-3, IEC 61131-9, etc. eingesetzt. Auch ein Anschluss von Feldbussen ist denkbar.

Die Führungsgehäusegruppe (20) hat eine quaderförmige Hüllkontur. Sie weist ein Führungsgehäuse (21) auf, in dem eine Antriebseinheit (61) und eine Ansteuer- und Regeleinheit (111) angeordnet sind. An der Außenseite des Führungsgehäuses (21) sind z.B. beidseitig jeweils zwei Schmieranschlüsse (22, 23) angeordnet. Auf dem Führungsgehäuse (21) sitzen als Teile der Führungsgehäusegruppe (20) Schienenführungsschuhe (27).

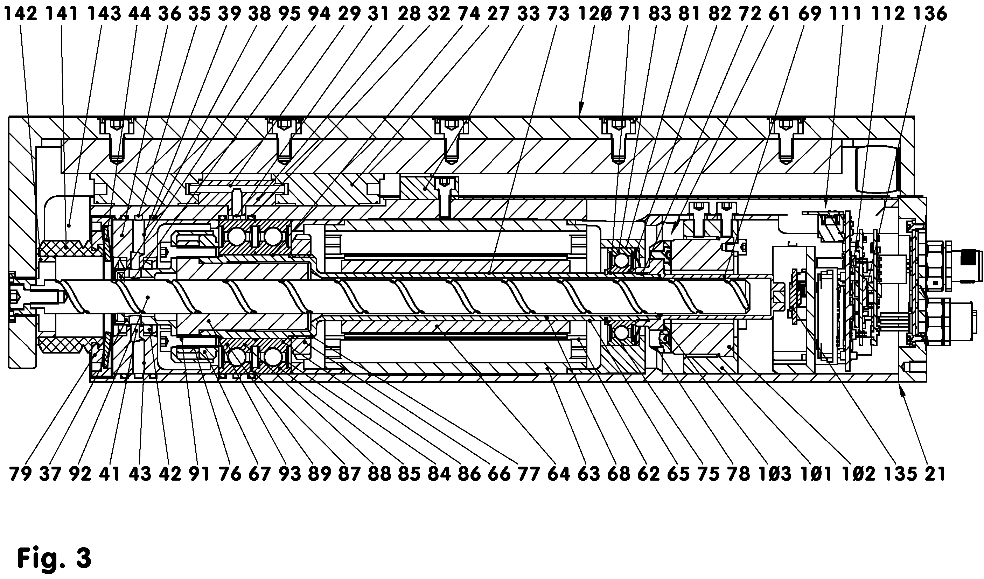

Die Figur 3 zeigt einen Längsschnitt der Linear-Antriebseinheit (10). Die Führungsgehäusegruppe (20) hat einen Führungsgehäusekörper (51), der an der Rückseite (24) mittels einer Bedien- und Anschlusstafel (25), vgl. Figur 2, verschlossen ist. Die Vorderseite (26) ist von einer Gewindespindel (92) eines Gewindespindel-Mutter-Triebs (91) durchdrungen.

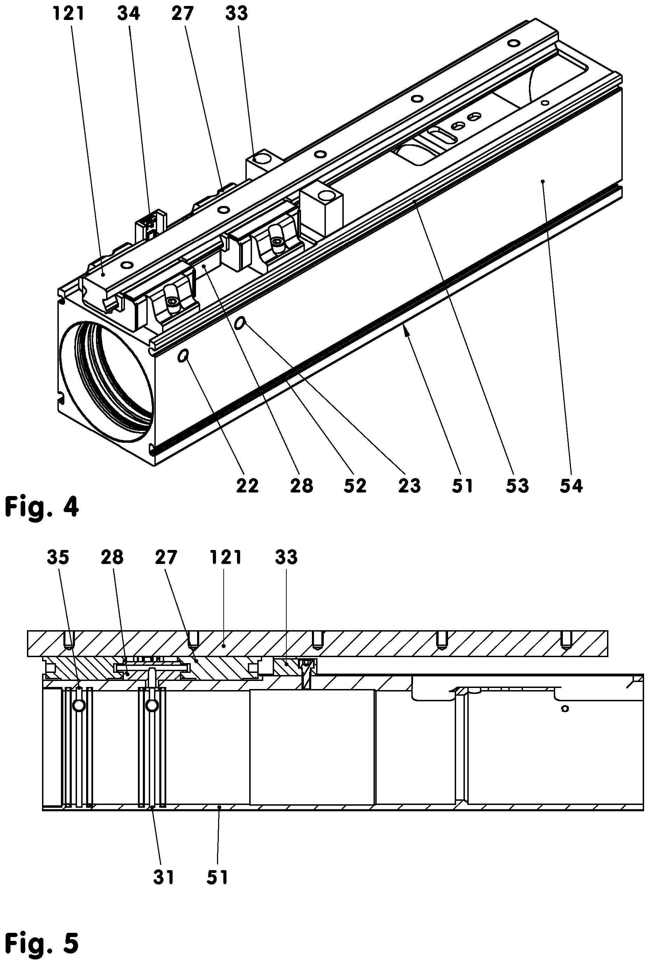

Die Figuren 4 und 5 zeigen den Führungsgehäusekörper (51) mit einigen Anbauteilen. Der Führungsgehäusekörper (51) hat die Gestalt eines Rohres mit quadratischem Außenquerschnitt. Er ist z.B. aus einem Aluminiumwerkstoff hergestellt. Die Kantenlänge des Quadrats beträgt beispielsweise 22 % der in der Längsrichtung (5) orientierten Länge des Führungsgehäusekörpers (51). An den Seitenflächen (54) des Führungsgehäusekörpers (51) sind parallel zu den Ober- und Unterseiten beidseitig Eingriffsnuten (52, 53) ausgebildet. Die unteren Eingriffsnuten (52) dienen der Aufnahme der Befestigungspratzen (11). Die oberen Eingriffsnuten (53) sind beispielsweise Sensornuten (53).

Der Führungsgehäusekörper (51) trägt in den Darstellungen der Figuren 4 und 5 eine Führungsschiene (121). Die z.B. T-förmig ausgebildete Führungsschiene (121) ist Teil der Schlittengruppe (120). Sie ist in dem an die Vorderseite (26) der Linear-Antriebseinheit (10) angrenzenden Bereich mittels vier an den Führungsgehäusekörper (51) angeschraubten Schienenführungsschuhen (27) am Führungsgehäusekörper (51) verschiebbar gelagert. Die Schienenführungsschuhe (27) können als Kugelumlaufschuhe ausgebildet sein. In den Darstellungen der Figuren 4 und 5 kragt die Führungsschiene (121) in Richtung der Rückseite (24) frei aus. Die Führungsschiene (121) ist im Ausführungsbeispiel auf 37 % ihrer Länge unterstützt.

Zwischen den beiden Schienenführungsschuhen (27) befindet sich ein Schmieradapter (28) der Führungsgehäusegruppe (20). Dieser ist hydraulisch mit dem Schmieranschluss (23) des Führungsgehäuses (21) verbunden. Schmiermittel, das vom Schmieranschluss (23) in den Schmieradapter (28) gepresst wird, wird weiter an die Führungsschiene (121) verdrängt. Der Schmieradapter (28) hat hierfür T-förmig angeordnete Schmiermittelkanäle (29). Gegebenenfalls kann eine Schmierkontrollvorrichtung vorgesehen sein, die eine ausreichende Schmierung der Paarung zwischen der Führungsschiene (121) und den Schienenführungsschuhen (27) überwacht. Es ist auch denkbar, die Zugabe des Schmiermittels zu automatisieren. Hierbei können beispielsweise einzelne Dosen des Schmiermittels in Abhängigkeit der Betriebsstunden und/oder des zurückgelegten Fahrwegs der Führungsschiene (121) relativ zu den Schienenführungsschuhen (27) zugegeben werden.

Im Führungsgehäuse (21) wird das Schmiermittel vom Schmieranschluss (23) durch einen Ringkanal (31) zum Schmieradapter (28) gefördert. Dieser Ringkanal (31) ist im Ausführungsbeispiel mittels zweier, in der Längsrichtung (5) zueinander beabstandeter O-Ringe (32) und den Außenring (85) eines Wälzlagers (84) begrenzt, vgl. Figur 3.

In Richtung des in den Figuren 4 und 5 auskragenden Endes der Führungsschiene (121) ist neben den Schienenführungsschuhen (27) ein Anschlagklotz (33) angeordnet. Dieser Anschlagklotz (33) begrenzt den Hub der Schlittengruppe (120) relativ zur Führungsgehäusegruppe (20) beim Ausfahren der Schlittengruppe (120).

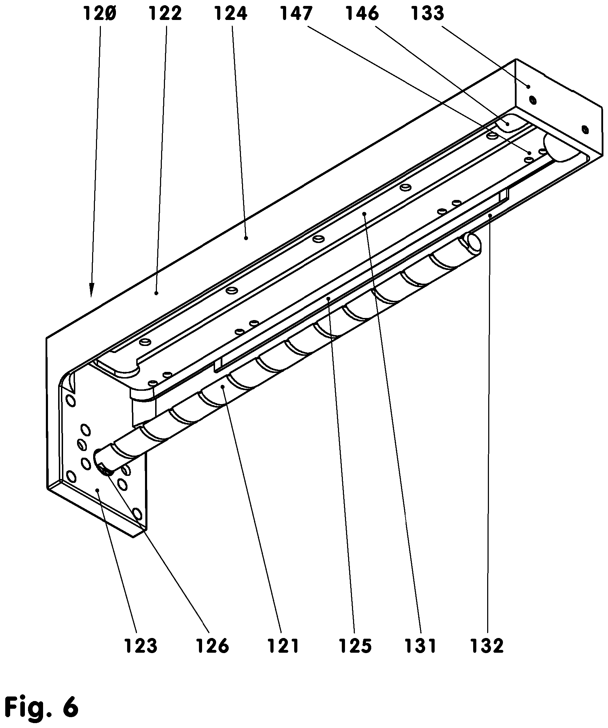

Aus dem Führungsgehäuse (21) ragt ein Messsensor (34) heraus. Dieser wirkt mit einem am Schlitten (122) der Schlittengruppe (120) angeordneten Maßstab (125) zusammen, vgl. Figur 6. Im Ausführungsbeispiel bilden der Messsensor (34) und der Maßstab (125) ein lineares z.B. magnetisches absolutes Wegmesssystem (34, 125). Dieses Wegmesssystem (34, 125) ist Teil eines in der Linear-Antriebseinheit (10) angeordneten Lageregelkreises. Der Lageregelkreis überwacht und regelt die Position der Schlittengruppe (120) relativ zur Führungsgehäusegruppe (20).

Die Antriebseinheit (61) weist einen Antriebsmotor (62), den Gewindespindel-Mutter-Trieb (91) und eine Brems- und/oder Klemmvorrichtung (101) auf. Der Antriebsmotor (62) hat einem im Führungsgehäuse (21) feststehenden Stator (63), der einen Rotor (64) umgibt. Der Stator (63) ist beispielsweise aus einem Stahlwerkstoff hergestellt. Die im Rotor (64) befestigte Motorwelle (65) ist als mehrteilige Hohlwelle ausgebildet. Die gestuft ausgebildete Motorwelle (65) durchdringt den Antriebsmotor (62) in der Längsrichtung (5). Der Antriebsmotor (62) ist beispielsweise als bürstenloser Gleichstrommotor ausgebildet.

Die Motorwelle (65) ist mittels dreier Wälzlager (81, 84, 87) im Führungsgehäusekörper (51) gelagert. Ein erstes Wälzlager (81) ist auf der der Ansteuer- und Regeleinheit (111) zugewandten Seite der Antriebseinheit (61) angeordnet. Es ist als beidseitig abgedichtetes Rillenkugellager ausgebildet. Diese Lagerstelle bildet das Loslager der Motorwellenlagerung. Der Innenring (82) ist an der Motorwelle (65) fixiert. Der Außenring (83) ist in der Längsrichtung (5) axial verschiebbar gelagert.

Das Festlager bilden zwei nebeneinander liegende Wälzlager (84, 87). Im Ausführungsbeispiel sind diese als diese als einander identische abgedichtete Rillenkugellager ausgebildet. Die Innenringe (86, 89) und die Außenringe (85, 88) sind aus einem Stahlwerkstoff hergestellt. Es ist auch denkbar, ein zweireihiges Rillenkugellager, ein zweireihiges Schrägkugellager, etc. einzusetzen. Die durch den Innendurchmesser bestimmte Nenngröße des Festlagers beträgt beispielsweise das 1,75-fache der Nenngröße des Loslagers. Eine Wellenmutter (66) und ein Endflansch (67) sichern die Lage des Festlagers auf der Motorwelle (65).

Die Motorwelle (65) hat im Ausführungsbeispiel eine Hauptwelle (68) und eine Ansatzwelle (69), die beispielsweise miteinander verschraubt sind. Die Hauptwelle (68) hat einen ersten Lagersitzabschnitt (71), einen Rotorabschnitt (73) und einen zweiten Lagersitzabschnitt (74). Der erste Lagersitzabschnitt (71) trägt ein Anschlussgewinde (72) und eine Nut für einen Sicherungsring (75). Sein Außendurchmesser entspricht der Nenngröße des Loslagers. Der Rotorabschnitt (73) hat beispielsweise denselben Außendurchmesser. Der Innendurchmesser des ersten Lagersitzabschnitts (71) und des Rotorabschnitts (73) beträgt z.B. 80 % des Außendurchmessers dieser Abschnitte (71, 73). Der Außendurchmesser des zweiten Lagersitzabschnitts (74) entspricht der Nenngröße des Festlagers. Sein Innendurchmesser beträgt z.B. 83 % seines Außendurchmessers. Der zweite Lagersitzabschnitt (74) trägt den Endflansch (67), der z.B. vier Gewindebohrungen (76) aufweist und ein Gewinde (77) für die Wellenmutter (66).

Die Ansatzwelle (69) ist z.B. auf den ersten Lagersitzabschnitt (71) aufgeschraubt. Sie hat einen Bremsflansch (78), an dem ein Teil der Brems- und/oder Klemmvorrichtung (101) angeordnet ist. Die Brems- und/oder Klemmvorrichtung (101) hat einen im Führungsgehäusekörper (51) befestigten feststehenden Teil (102) und einen am Bremsflansch (78) befestigten rotierenden Teil (103). Der Nennluftspalt zwischen dem feststehenden Teil (102) und dem rotierenden Teil (103) beträgt mindestens 0,15 Millimeter. Der maximale Nennluftspalt beträgt z.B. 0,4 Millimeter. Die Brems- und/oder Klemmvorrichtung (101) ist stromlos geschlossen. Die Brems- und/oder Klemmkraft wird hierbei z.B. mittels eines Permanentmagneten sichergestellt. Die Induktivität des Permanentmagneten beträgt beispielsweise zwischen 0,4 Henry und 0,7 Henry. Zum Lüften der Brems- und/oder Klemmvorrichtung (101) wird beispielsweise eine Betriebsspannung von 24 Volt eingesetzt. Die Brems- und/oder Klemmvorrichtung (101) kann beispielsweise einen Dehnmessstreifen zur Überwachung ihrer realen Verspannung aufweisen.

Innerhalb des zweiten Lagersitzabschnitts (74) trägt die Motorwelle (65) eine Spindelmutter (93) des Gewindespindel-Mutter-Triebs (91). Die Spindelmutter (93) ist beispielsweise zweigängig ausgebildet. Sie greift in die Gewindespindel (92) ein, die in der Längsrichtung (5) der Linear-Antriebseinheit (10) orientiert ist. Im Ausführungsbeispiel ist der Gewindespindel-Mutter-Trieb (91) als Kugelgewindetrieb ausgebildet. Beispielsweise hat die Spindelmutter (93) umlaufend geführte Kugeln.

Im Führungsgehäuse (21) ist ein Spindeltrieb-Schmiersystem angeordnet. Dieses weist einen im Führungsgehäusekörper (51) mit dem Schmieranschluss (22) verbundenen Verteilkanal (35) und einen zweiteiligen Schmieradapter (36, 37) auf. Der Verteilkanal (35) ist in den Längsrichtungen (5) beidseitig mittels jeweils eines Dichtrings (38) abgedichtet. Der erste Schmieradapterteil (36) sitzt fest im Führungsgehäuse (21). Er hat beispielsweise vier Radialkanäle (39), die in einen innenliegenden Umlaufkanal (41) münden. Auf beiden Seiten des Umlaufkanals (41) dichten Flachdichtungen (42) den Umlaufkanal (41) gegen die Umgebung ab.

Der zweite Schmieradapterteil (37) ist an der Spindelmutter (93) befestigt und an der Motorwelle (65) zentriert. Er hat beispielsweise sechs Radialbohrungen (43), die in ein die Gewindespindel (92) radial umgebendes Schmiermittelreservoir (94) münden. Eine Flachdichtung (95) dichtet das Schmiermittelreservoir gegen die Umgebung ab.

Die Antriebseinheit (61) ist mittels einer Innenmutter (79) im Führungsgehäusekörper (51) festgelegt. Diese Innenmutter (79) belastet ein Tellerfederelement (44), dass sich am ersten Schmieradapterteil (36) abstützt. Damit ist, z.B. bei Temperaturschwankungen, ein Längenausgleich zwischen den Stahl- und Aluminiumbauteilen der Antriebseinheit (61) möglich.

Die Innenmutter (79) trägt einen Elastomerkörper (141) in der Bauform eines Strukturdämpfers. Dieser ist als rotationssymmetrischer Hohlkörper ausgebildet. Beim Einfahren der Linear-Antriebseinheit (10) schlägt der Schlitten (122) am Elastomerkörper (141) an und verformt diesen. Beispielsweise beträgt die axiale Verformung bis zu 20 % der Gesamtlänge des Elastomerkörpers (141). Ein Anschlagtopf (142) begrenzt die Stirnseite des Elastomerkörpers (141). Der Elastomerkörper (141) und der Anschlagtopf (142) bilden damit eine Endlagensicherung (143) für die eingefahrene Linear-Antriebseinheit (10). Der Elastomerkörper (141) kann zusätzlich als Schmierstoffreservoir für die Schmierung des Gewindespindel-Mutter-Triebs (91) eingesetzt werden.

Die Gewindespindel (92) des Gewindespindel-Mutter-Triebs (91) ist auskragend an einer Schlittenfrontplatte (123) des Schlittens (122) befestigt. Im Ausführungsbeispiel ist die Gewindespindel (92) als rechtsgängige Gewindespindel (92) mit konstanter Steigung ausgebildet. Sie hat an ihrer dem Schlitten (122) zugewandten Stirnseite zwei einander gegenüberliegende Schlüsselflächen (126). Bei montiertem Schlitten (122) tauchen diese in ein komplementär ausgebildetes Verdrehsicherungsteil (127) ein. Dieses Verdrehsicherungsteil (127) ist in der Schlittenfrontplatte (123) des Schlittens (122) befestigt. Bei montierter Linear-Antriebseinheit (10) durchdringt das freie Ende der Gewindespindel (92) den Antriebsmotor (62).

Der in der Schnittdarstellung der Figur 3 L-förmig ausgebildete Schlitten (122) hat eine normal zur Schlittenfrontplatte (123) orientierte Schlittenplatte (124). Die z.B. quaderförmig ausgebildete Schlittenplatte (124) ist mittels Befestigungsschrauben (128) auf der Führungsschiene (121) befestigt. Sowohl in der Schlittenplatte (124) als auch in der Schlittenfrontplatte (123) befinden sich Gewindebohrungen (129). In diesen kann z.B. ein Adapterwerkzeug befestigt werden.

Die Figur 6 zeigt die Schlittengruppe (120) ohne die Führungsschiene (121) von der Unterseite. Die Schlittenfrontplatte (123) ist an die Schlittenplatte (124) angeformt. Die Schlittenplatte (124) hat eine Ausfräsung (131), in der bei montierter Schlittengruppe (120) die Führungsschiene (121) sitzt. An einem in der Längsrichtung (5) orientierten Randsteg (132) des Schlittens (122) ist der Maßstab (125) des Wegmesssystems (34, 125) angeordnet. Ein ebenfalls an der Unterseite angeordneter Rückseitensteg (133) trägt zwei Elastomerkörper (146). Diese sind beispielsweise so ausgebildet wie der oben beschriebene Elastomerkörper (141). Die beiden am Rückseitensteg (133) angeordneten Elastomerkörper (146) begrenzen den Hub der relativ zur Führungsgehäusegruppe (20) ausfahrenden Schlittengruppe (120). Sie bilden eine Endlagensicherung (147) der Linear-Antriebseinheit (10) beim Ausfahren der Schlittengruppe (120). Der in der Längsrichtung (5) orientierte maximale Hub der Schlittengruppe (120) beträgt im Ausführungsbeispiel 100 Millimeter oder 150 Millimeter. Der maximale Hub ist anhängig von der Baugröße der Linear-Antriebseinheit (10).

Der Antriebsmotor (62) der Linear-Antriebseinheit (10) hat einen Encoder (135). Dieser ist das Messglied eines Geschwindigkeitsregelkreises. Der Regler (136) des Geschwindigkeitsregelkreises ist innerhalb des Führungsgehäuses (21) angeordnet. Beispielsweise kann der Regler (136) des Geschwindigkeitsregelkreises identisch sein mit dem Regler des Lageregelkreises. Die beiden genannten Regelkreise können als Kaskadenregelkreise angeordnet sein. Es ist aber auch denkbar, die beiden genannten Regelkreise unabhängig voneinander anzusteuern. Die Signale der Messglieder (125, 135) können auch gemeinsam ausgewertet werden.

Die Linear-Antriebseinheit (10) kann außerdem einen Stromregelkreis und/oder einen Spannungsregelkreis aufweisen. Dieser kann ebenfalls mittels desselben Reglers (136) wie die genannten Regelkreise oder mittels eines separaten Reglers betrieben werden. Sämtliche elektrischen Komponenten aller Regelkreise sind innerhalb des Führungsgehäuses (21) angeordnet.

Die Regelkreise sind Teil der Ansteuerungs- und Regeleinheit (111) der Linear-Antriebseinheit (10). Die Regelkreise sind galvanisch getrennt von der Stromversorgung des Antriebsmotors (62) und der Brems- und/oder Klemmvorrichtung (101). Damit können beispielsweise die Leistungskomponenten, z.B. der Antriebsmotor (62), unabhängig von der Ansteuerung an neue Leistungsanforderungen angepasst werden.

Die Ansteuerungs- und Regeleinheit (111) weist beispielsweise eine Recheneinheit (112) auf. Diese umfasst z.B. einen Mikrocontroller. Die Recheneinheit (112) wird beispielsweise eingesetzt, um aus den über die Eingangsschnittstelle, das sind die Logikanschlüsse (13) und die Kommunikationsanschlüsse (14), empfangenen Daten und Signalen spezifische Ansteuerungsdaten der Linear-Antriebseinheit (10) zu erzeugen. Auch kann z.B. ein Erreichen der Soll-Position, beispielsweise zur Freigabe weiterer Funktionen an eine übergeordnete Steuerung, übermittelt werden.

Im Führungsgehäuse (21) kann außerdem ein Datenspeicher und/oder ein Programmspeicher angeordnet sein. Mittels des Datenspeichers werden beispielsweise Betriebsdaten, Fehlermeldungen, etc. gesammelt, die beispielsweise von einer externen Stelle, z.B. dem Wartungspersonal, ausgelesen werden können. Dies können Ist-Daten und/oder statistische Daten sein.

Im Programmspeicher können z.B. eine Vielzahl von produktspezifischen Ablaufproprogrammen der Linear-Antriebseinheit (10) hinterlegt sein. Das einzelne Ablaufprogramm enthält beispielsweise Angaben über den produktspezifischen Hub, das produktspezifische Geschwindigkeitsprofil beim Verfahren der Schlittengruppe (120) der Linear-Antriebseinheit (10), etc. Produktspezifische Daten, die z.B. zum Erstellen neuer Ablaufprogramme genutzt werden, können im Datenspeicher hinterlegt sein. Um ein Ablaufprogramm aufzurufen, genügt dann beispielsweise eine drahtgebunden oder drahtlos an eine Eingangsschnittstelle der Linear-Antriebseinheit (10) übermittelte Programmnummer und ein Startsignal. Nach Abschluss des Ablaufprogramms wird ein z.B. binäres Abschlusssignal an die übergeordnete Steuerung übermittelt. Die übergeordnete Steuerung kann dann ein Folgeprogramm, z.B. eine spanende Bearbeitung eines Werkstücks, starten.

Beim Einsatz der Linear-Antriebseinheit (10) wird beispielsweise die Schlittengruppe (120) relativ zur Führungsgehäusegruppe (20) aus der in den Figuren 1 und 2 dargestellten eingefahrenen Endposition ausgefahren. Die Brems- und/oder Klemmvorrichtung (101) wird gelüftet. Die Kontrollleuchten (15) an der Rückseite (24) des Führungsgehäuses (21) zeigen den Betriebszustand der Linear-Antriebseinheit (10) an, z.B. die Spannungsversorgungen, den Zustand der Kommunikationswege, etc. Die Bewegung der Schlittengruppe (120) relativ zur Führungsgehäusegruppe (20) erfolgt mit einem vorgegebenen Geschwindigkeitsprofil. Dies wird mittels des Geschwindigkeitsregelkreises überwacht.

Sobald die z.B. werkstückspezifisch vorgegebene Soll-Position der Schlittengruppe (120) relativ zur Führungsgehäusegruppe (20) erreicht ist, bewirkt der Regler (136) des Lageregelkreises ein Anhalten des Antriebsmotors (62) und ein Unterbrechen des elektrischen Lüftstroms der Brems- und/oder Klemmvorrichtung (101). Die Brems- und/oder Klemmvorrichtung (101) schließt. Die Soll-Position des Schlittengruppe (120) kann jede Position innerhalb des Hubs der Schlittengruppe (120) sein. Falls die Soll-Position in der Nähe einer der Endlagen der Schlittengruppe (120) liegt, werden gegebenenfalls die Elastomerkörper (141; 146) verformt.

Beim Auftreten einer Störung kann die elektrische Versorgung des Antriebsmotors (62) unmittelbar unterbrochen werden. Gleichzeitig wird beispielsweise die Lüftung der Brems- und/oder Klemmvorrichtung (101) unterbrochen. Die Brems- und/oder Bremsvorrichtung (101) schließt, sodass die Linear-Antriebseinheit (10) sofort stillgesetzt wird. Beispielsweise kann zur Erkennung von Störungen eine interne Diagnose eingesetzt werden.

Beispielsweise über die Kommunikationsanschlüsse (14) ist eine Aktualisierung der Ablaufprogramme und/oder der Daten des Datenspeichers möglich. Dies kann z.B. vom Betreiber oder vom Hersteller aus erfolgen.

Auch eine Kombination der einzelnen Ausführungsbeispiele ist denkbar.

### Bezugszeichenliste:

- 5: Längsrichtung

- 10: Linear-Antriebseinheit
- 11: Befestigungsspratzen
- 12: Versorgungsanschluss
- 13: Logikanschluss
- 14: Kommunikationsanschluss
- 15: Kontrollleuchten

- 20: Führungsgehäusegruppe
- 21: Führungsgehäuse
- 22: Schmieranschluss
- 23: Schmieranschluss
- 24: Rückseite
- 25: Bedien- und Anschlusstafel
- 26: Vorderseite
- 27: Schienenführungsschuhe
- 28: Schmieradapter
- 29: Schmiermittelkanäle

- 31: Ringkanal
- 32: O-Ringe
- 33: Anschlagklotz
- 34: Messsensor, Teil des Wegmesssystems
- 35: Verteilkanal
- 36: Schmieradapterteil
- 37: Schmieradapterteil
- 38: Dichtring
- 39: Radialkanäle

- 41: Umlaufkanal
- 42: Flachdichtungen
- 43: Radialbohrungen
- 44: Tellerfederelement, Längenausgleichselement

- 51: Führungsgehäusekörper
- 52: Eingriffsnut
- 53: Eingriffsnut, Sensornut
- 54: Seitenflächen

- 61: Antriebseinheit
- 62: Antriebsmotor
- 63: Stator
- 64: Rotor
- 65: Motorwelle
- 66: Wellenmutter
- 67: Endflansch
- 68: Hauptwelle
- 69: Ansatzwelle

- 71: erster Lagersitzabschnitt
- 72: Anschlussgewinde
- 73: Rotorabschnitt
- 74: zweiter Lagersitzabschnitt
- 75: Sicherungsring
- 76: Gewindebohrungen
- 77: Gewinde für (66)
- 78: Bremsflansch
- 79: Innenmutter

- 81: Wälzlager
- 82: Innenring
- 83: Außenring
- 84: Wälzlager
- 85: Außenring
- 86: Innenring
- 87: Wälzlager
- 88: Außenring
- 89: Innenring

- 91: Gewindespindel-Mutter-Trieb
- 92: Spindel, Gewindespindel
- 93: Spindelmutter
- 94: Schmiermittelreservoir
- 95: Flachdichtung

- 101: Brems- und/oder Klemmvorrichtung
- 102: feststehender Teil von (101)
- 103: rotierender Teil von (101)

- 111: Ansteuer- und Regeleinheit
- 112: Recheneinheit

- 120: Schlittengruppe
- 121: Führungsschiene
- 122: Schlitten
- 123: Schlittenfrontplatte
- 124: Schlittenplatte
- 125: Maßstab, Teil des Wegmesssystems
- 126: Schlüsselflächen
- 127: Verdrehsicherungsteil
- 128: Befestigungsschrauben
- 129: Gewindebohrungen

- 131: Ausfräsung
- 132: Randsteg
- 133: Rückseitensteg

- 135: Encoder, Drehgeber
- 136: Regler
- 141: Elastomerkörper
- 142: Anschlagtopf
- 143: Endlagensicherung

- 146: Elastomerkörper
- 147: Endlagensicherung

## Patentansprüche

1. Linear-Antriebseinheit (10) mit einer Führungsgehäusegruppe (20) und mit einer an dieser linear verfahrbar gelagerten Schlittengruppe (120), wobei in einem Führungsgehäuse (21) der Führungsgehäusegruppe (20) zumindest ein elektrischer Antriebsmotor (62) mit einem Stator (63) und einem Rotor (64) und ein mittels des Antriebsmotors (62) getriebener, die Schlittengruppe (120) antreibender Gewindespindel-Mutter-Trieb (91) angeordnet sind, **dadurch gekennzeichnet,**
- **dass** der Gewindespindel-Mutter-Trieb (91) eine mit der Schlittengruppe (120) verbundene Gewindespindel (92) und eine mit dem Rotor (64) verbundene Spindelmutter (93) aufweist und
- **dass** die Gewindespindel (92) den Antriebsmotor (62) durchdringt.

2. Linear-Antriebseinheit (10) nach Anspruch 1, **dadurch gekennzeichnet, dass** sie eine Endlagensicherung (143) für die eingefahrene Endlage und eine Endlagensicherung (147) für die ausgefahrene Endlage der Schlittengruppe (120) aufweist.

3. Linear-Antriebseinheit (10) nach Anspruch 1, **dadurch gekennzeichnet, dass** die Gewindespindel (92) verdrehfest in einem Schlitten (122) der Schlittengruppe (120) befestigt ist.

4. Linear-Antriebseinheit (10) nach Anspruch 1, **dadurch gekennzeichnet, dass** im Führungsgehäuse (21) mindestens ein Längenausgleichselement (44) angeordnet ist.

5. Linear-Antriebseinheit (10) nach Anspruch 1, **dadurch gekennzeichnet, dass** sie zwei voneinander unabhängige Schmiersysteme aufweist, von denen ein erstes ein Schmiersystem für den Gewindespindel-Mutter-Trieb (91) und ein zweites ein Schmiersystem für eine Linearführung der Schlittengruppe (120) ist.

6. Linear-Antriebseinheit (10) nach Anspruch 1, **dadurch gekennzeichnet,**
- **dass** sie zumindest einen Geschwindigkeitsregelkreis und einen Lageregelkreis aufweist und
- **dass** sämtliche elektrischen Bauteile der genannten Regelkreise im Führungsgehäuse (21) angeordnet sind.

7. Linear-Antriebseinheit (10) nach Anspruch 6, **dadurch gekennzeichnet, dass** der Lageregelkreis ein absolutes Wegmesssystem (34, 125) aufweist.

8. Linear-Antriebseinheit (10) nach Anspruch 6, **dadurch gekennzeichnet, dass** zumindest der Antriebsmotor (62) galvanisch getrennt ist von den Regelkreisen.

9. Linear-Antriebseinheit (10) nach Anspruch 1, **dadurch gekennzeichnet, dass** sie eine im Führungsgehäuse (21) angeordnete stromlos geschlossene Brems- und/oder Klemmvorrichtung (101) aufweist.
